# EUROPEAN PATENT APPLICATION

(11) **EP 2 849 496 A1**
(43) Date of publication of application: **18.03.2015**
(21) Application number: 13788432.6
(22) Date of filing: 24.04.2013
(51) Int. Cl.: H04W 48/12, H04W 28/06, H04W 28/16, H04W 72/04

(54) **WIRELESS COMMUNICATION SYSTEM, WIRELESS BASE STATION DEVICE, USER TERMINAL AND COMMUNICATION CONTROL METHOD**

(30) Priority: 10.05.2012 JP 2012108844
(71) Applicant: NTT DOCOMO, INC., Chiyoda-ku Tokyo 100-6150 (JP)
(72) Inventor: NAGATA, Satoshi, Tokyo 100-6150 (JP); TAKEDA, Kazuaki, Tokyo 100-6150 (JP); KISHIYAMA, Yoshihisa, Tokyo 100-6150 (JP); LIU, Liu, Beijing 100190 (CN); JIANG, Yu, Beijing 100190 (CN); YUN, Xiang, Beijing 100190 (CN); CHEN, Lan, Beijing 100190 (CN)
(74) Representative: Hoffmann Eitle
(86) International application number: PCT/JP2013/061982
(87) International publication number: WO 2013/168561

(57) **Abstract**

The present invention is designed to realize signaling of cell index information that is suitable for CoMP transmission/reception techniques. The radio base station apparatus of a special cell generates downlink control information, in which the indices of CoMP sets are incorporated in a physical downlink control channel that is shared between the multiple cells that carry out joint transmission, based on a table in which indices to represent individual coordinated cells that serve as transmission points in CoMP transmission and indices of CoMP sets to represent combinations of multiple cells that carry out joint transmission in CoMP transmission are mapped to bit data.

## Description

### Technical Field

The present invention relates to a radio communication system, a radio base station apparatus, a user terminal and a communication control method in next-generation mobile communication systems.

### Background Art

In a UMTS (Universal Mobile Telecommunications System) network, attempts are made to optimize features of the system, which are based on W-CDMA (Wideband Code Division Multiple Access), by adopting HSDPA (High Speed Downlink Packet Access) and HSUPA (High Speed Uplink Packet Access), for the purposes of improving spectral efficiency and improving the data rates. With this UMTS network, long-term evolution (LTE) is under study for the purposes of further increasing high-speed data rates, providing low delay, and so on (non-patent literature 1).

In a third-generation system, it is possible to achieve a transmission rate of maximum approximately 2 Mbps on the downlink by using a fixed band of approximately 5 MHz. Meanwhile, in an LTE system, it is possible to achieve a transmission rate of about maximum 300 Mbps on the downlink and about 75 Mbps on the uplink by using a variable band, which ranges from 1.4 MHz to 20 MHz. In the UMTS network, successor systems of the LTE system -- referred to as, for example, "LTE-Advanced" or "LTE enhancement" (hereinafter referred to as "LTE-A") -- are under study for the purpose of achieving further broadbandization and increased speed.

### Citation List

### Non-Patent Literature

Non-Patent Literature 1: 3GPP, TR25.912 (V7.1.0), "Feasibility Study for Evolved UTRA and UTRAN," Sept. 2006

### Summary of the Invention

### Technical Problem

In LTE-A (Rel. 10), there has been an agreement to employ carrier aggregation as a technique for grouping a plurality of carrier waves (CCs: Component Carriers) of varying frequency bands to expand the band. In LTE, a physical downlink shared channel (PDSCH) is defined as a traffic channel, and
a physical downlink control channel (PDCCH) is defined as a control channel to report information that is necessary to receive the PDSCH. To cope with cases where a plurality of component carriers are used in carrier aggregation, in LTE-A (Rel. 10), cross-carrier scheduling to schedule the PDSCHs of a plurality of component carriers (one primary cell + maximum five secondary cells) from the PDCCH of one primary cell is employed. Downlink control information to be transmitted by the PDCCH is defined in detail in the form of DCI (Downlink Control Information) formats. DCI may be referred to as downlink control information that is transmitted by the PDCCH.

When cross-carrier scheduling is applied, in a primary cell, radio resources that can transmit the PDCCH (which is a field of maximum three OFDM symbols from the top OFDM symbol, and which is referred to as "control field") are allocated DCI of the PDCCHs of secondary cells. So, to make it possible to identify which PDCCH is provided to receive which cell's PDSCH, a CIF (Cell Index Field), which shows cell indices, is defined in DCI.

As a promising technique for achieving even more improved system performance beyond the LTE system, there is inter-cell orthogonalization. For example, in the LTE-A system, intra-cell orthogonalization is made possible by orthogonal multiple access on both the uplink and the downlink. That is to say, on the downlink, orthogonality is established between user terminals UE (User Equipment) in the frequency domain. Between cells, like in W-CDMA, interference randomization by one-cell frequency re-use is achieved.

The 3GPP (3rd Generation Partnership Project) is contemplating introducing coordinated multi-point transmission/reception (CoMP) techniques as techniques to realize inter-cell orthogonalization in in LTE-A (Rel.11). According to these CoMP techniques, a plurality of cells coordinate and perform signal processing for transmission and reception with respect to one user terminal UE or a plurality of user terminals UE. By applying these CoMP techniques, improvement of throughput performance is expected, especially with respect to user terminal UEs located on cell edges.

CoMP transmission makes use of a plurality of transmission modes, including joint transmission (JT) to transmit shared data channels from multiple cells to one user terminal at the same time, DPS (Dynamic Point Selection) to transmit data by switching the transmitting cells for a user terminal on a dynamic basis, and CS (Coordinate Scheduling)/CB (Coordinate Beamforming) to transmit a shared data channel from one cell alone.

However, although, when CoMP is applied, a plurality of cells (CoMP set) transmit data to a user terminal using the same frequency band, the user terminal has to identity which DCI that is received belongs to which cell's PDCCH, as in the case of cross-carrier scheduling. Consequently, the radio base stations have to report, to the user terminal, CoMP information for identifying which PDCCH provides information to receive which cell's PDSCH. Nevertheless, CoMP information changes in accordance with the CoMP mode. It is also possible to set separate CoMP sets with respect to different frequency bands, and so the CoMP information to report to the user terminal becomes even more complex.

The present invention has been made in view of the above, and it is therefore an object of the present invention to provide a radio communication system, a radio base station apparatus, a user terminal and a communication control method to realize signaling of cell index information that is suitable for CoMP transmission/reception techniques.

### Solution to Problem

The radio communication system of the present invention has a plurality of radio base station apparatuses that each form a cell, and a user terminal that connects with each radio base station apparatus through a radio link, and this radio communication system supports a transmission mode, in which the plurality of radio base station apparatuses serve as transmission points and carry out CoMP transmission to the user terminal, and a radio base station apparatus of a special cell transmits physical downlink control channels of multiple cells, and also all the radio base station apparatuses that carry out CoMP transmission transmit a physical downlink shared data channel of each cell, and, the radio base station apparatus of the special cell has a generating section that, based on a table in which indices to represent individual coordinated cells that serve as transmission points in CoMP transmission and indices of CoMP sets to represent combinations of multiple cells that carry out joint transmission in CoMP transmission are mapped to bit data, generates downlink control information, in which the indices of CoMP sets are incorporated in a physical downlink control channel that is shared between the multiple cells that carry out joint transmission, and a transmission section that transmits the physical downlink control channel of each cell, including the downlink control information generated, and, this user terminal has a receiving section that, when the transmission mode is applied, receives the physical downlink control channels of the multiple cells from the radio base station apparatus of the special cell, and also receives a physical downlink shared data channel from all the radio base station apparatuses that carry out coordinated multi-point transmission, and a determining section that analyzes the indices of CoMP sets incorporated in the downlink control information included in the physical downlink control channels received, using a table of the same content as in the radio base station apparatus of the special cell, and specifies a CoMP set.

The radio base station apparatus of the present invention is a radio base station apparatus to which a user terminal connects through a radio link, and this radio base station apparatus has a scheduler that schedules CoMP transmission in which, with other radio base station apparatuses, the radio base station apparatus serves as a transmission point and carries out coordinated multi-point transmission to the user terminal, and a generating section that, when, in CoMP transmission, physical downlink control channels of multiple cells are transmitted from a special cell, generates downlink control information, based on a table in which indices to represent individual coordinated cells that serve as transmission points and indices of CoMP sets to represent combinations of multiple cells that carry out joint transmission are mapped to bit data, where, in the downlink control information, the indices of CoMP sets are incorporated in a physical downlink control channel that is shared between the multiple cells that carry out joint transmission, and a transmission section that transmits the physical downlink control channel of each cell, including the downlink control information generated, from the special cell.

The user terminal of the present invention is a user terminal that connects with a plurality of radio base station apparatuses that each form a cell, through a radio link, and this user terminal has a receiving section that, when, in CoMP transmission in which the plurality of radio base station apparatuses carry out coordinated multi-point transmission, a special cell transmits physical downlink control channels of multiple cells, receives the physical downlink control channels of the multiple cells from the radio base station apparatus of the special cell, and also receives a physical downlink shared data channel from all the radio base station apparatuses that carry out coordinated multi-point transmission, and a detection section that analyzes the indices of coordinated cells or CoMP sets incorporated in the downlink control information included in the physical downlink control channel of each cell received, using a table that is prepared in advance, and specifies coordinated cells or a CoMP set, wherein, in the table, indices to represent individual coordinated cells that serve as transmission points in CoMP transmission and indices of CoMP sets to represent combinations of multiple cells that carry out joint transmission in CoMP transmission are mapped to bit data.

The communication control method of the present invention is a communication control method in a radio communication system comprising a plurality of radio base station apparatuses that each form a cell, and a user terminal that connects with each radio base station apparatus through a radio link, and this communication control method comprising: scheduling CoMP transmission in which the plurality of radio base station apparatuses serve as transmission points and carry out coordinated multi-point transmission to the user terminal; and when, in CoMP transmission, physical downlink control channels of multiple cells are transmitted from a special cell, generating downlink control information, based on a table in which indices to represent individual coordinated cells that serve as transmission points and indices of CoMP sets to represent combinations of multiple cells that carry out joint transmission are mapped to bit data, where, in the downlink control information, the indices of CoMP sets are incorporated in a physical downlink control channel that is shared between the multiple cells that carry out joint transmission, and
transmitting the physical downlink control channel of each cell, including the downlink control information generated, from the special cell.

### Technical advantage of the Invention

According to the present invention, it is possible to realize signaling of cell index information that is suitable for CoMP transmission/reception techniques.

### Brief Description of the Drawings

FIG. 1 provides diagrams to explain coordinated multi-point transmission;
FIG. 2 provides diagrams to explain examples of system configurations;
FIG. 3 is a diagram to explain a CIF table;
FIG. 4 is a diagram to show allocation of the PDCCH;
FIG. 5 provides diagrams to explain examples of system configurations;
FIG. 6 is a diagram to explain a CIF table;
FIG. 7 is a diagram to show allocation of the PDCCH;
FIG. 8 is a diagram to explain a CIF table;
FIG. 9 is a diagram to show allocation of PDCCH;
FIG. 10 is a diagram to explain search spaces;
FIG. 11 is a diagram to explain a CIF table;
FIG. 12 is a diagram to show allocation of the PDCCH;
FIG. 13 provides diagrams to explain examples of system configurations;
FIG. 14 is a diagram to explain a CIF table;
FIG. 15 is a diagram to show allocation of the PDCCH;
FIG. 16 is a diagram to explain a system configuration of a radio communication system;
FIG. 17 is a diagram to explain an overall configuration of a base station apparatus;
FIG. 18 is a diagram to explain an overall configuration of a user terminal;
FIG. 19 is a functional block diagram of a base station apparatus; and
FIG. 20 is a functional block diagram of a user terminal.

### Description of Embodiments

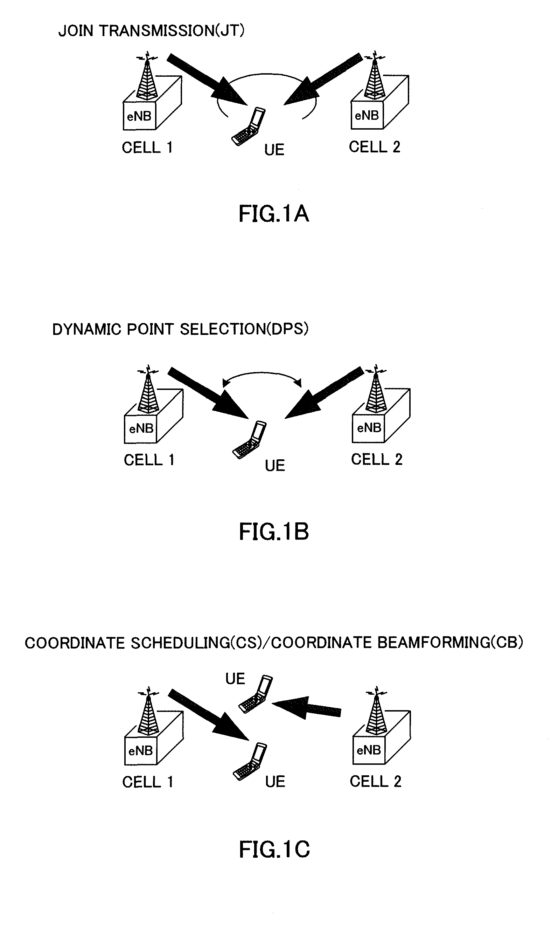

Now, an embodiment of the present invention will be described below in detail with reference to the accompanying drawings. First, CoMP transmission/reception techniques, which are studied for introduction in LTE-A (Rel. 11), will be described with reference to FIG. 1.

FIG. 1A is a conceptual diagram of joint transmission (hereinafter also referred to as "CoMP transmission (JT)"), which is one type of CoMP transmission. As shown in FIG. 1A, in joint transmission, in one subframe, the same shared data channel is transmitted from multiple cells to one user terminal UE simultaneously. The user terminal UE receives the PDSCH from both transmitting cells of cell 1 and cell 2 in one subframe. The user terminal UE receives the PDSCH transmitted from cell 1 and cell 2 in joint transmission, based on the PDCCH that is shared between cell 1 and cell 2. In this description, a combination of cells to transmit the same PDSCH simultaneously by joint transmission will be hereinafter referred as, for example, "cells 1+2."

FIG. 1B is a conceptual diagram of DPS, which is one type of CoMP transmission. As shown in FIG. 1B, in DPS, the transmitting cells for one user terminal UE are switched around on a dynamic basis, and the PDSCH is transmitted. Based on the PDCCHs transmitted from cell 1 and cell 2 respectively, the user terminal UE receives the PDSCHs transmitted from cell 1 and cell 2 respectively.

FIG. 1C is a conceptual diagram of CS/CB, which is one type of CoMP transmission. As shown in FIG. 1C, in CS/CB, in one subframe, the PDSCH is transmitted to one user terminal UE from one transmitting cell alone. In FIG. 1C, in a given subframe, one user terminal UE receives the PDSCH from cell 1, and the other user terminal UE receives the PDSCH from cell 2.

The above CoMP techniques have been confirmed to be effective to improve the throughput of user terminals UE located on cell edges. The radio base station apparatuses eNB make the user terminals UE feed back quality information from each cell. The radio base station apparatuses eNB find the differences in quality information (for example, in the RSRP (Reference Signal Received Power), the RSRQ (Reference Signal Received Quality) or the SINR (Signal Interference plus Noise Ratio)), on a per cell basis. When the differences in quality information between the cells are equal or fall below a threshold value -- that is, when the differences in quality between the cells are insignificant --, it is possible to judge that the user terminals UE are located on cell edges. When the user terminals UE are judged to be located on cell edges, CoMP transmission is applied. When the differences in quality information between the cells exceed a threshold value -- that is, when there are significant quality differences between the cells --, it is judged that there are user terminals UE located close to the radio base station apparatus eNB forming one cell, and that the user terminals UE are located near the center of a cell of high received quality. In this case, it is possible to maintain high received quality without applying CoMP transmission.

When CoMP transmission is applied, a user terminal UE feeds back channel state information for each of a plurality of cells to a radio base station apparatus eNB (the radio base station apparatus eNB of the serving cell). When CoMP transmission is not applied, the user terminal UE feeds back the channel state information of the serving cell to the radio base station apparatus eNB.

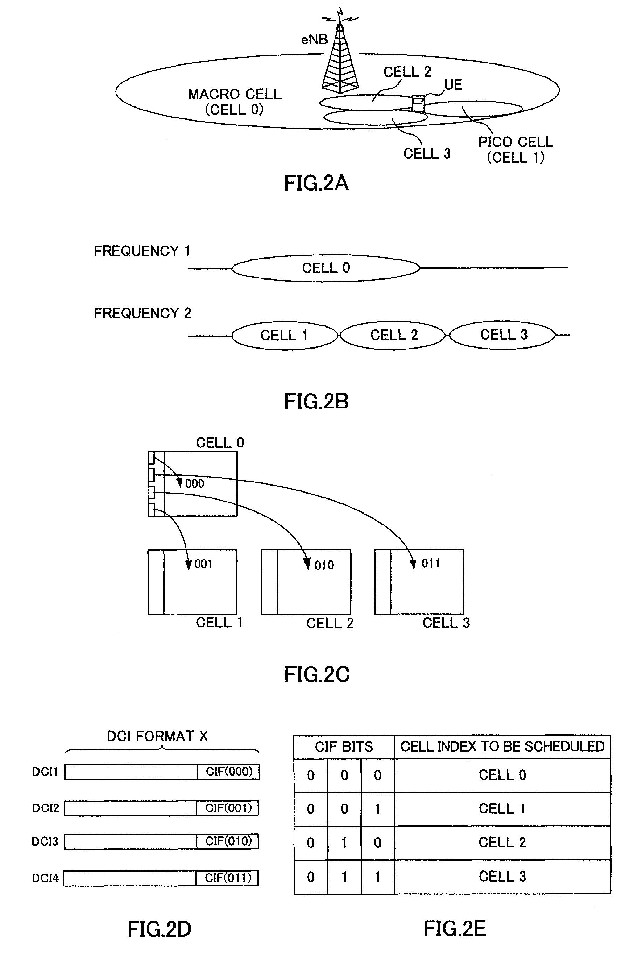

As an example, a case will be considered where CoMP is applied to the system configuration shown in FIG. 2A (HetNet environment). In FIG. 2A, there is a macro cell (cell 0) having a coverage area of a wide range, and a plurality of pico cells (cells 1 to 3) having local coverage areas are placed in the coverage area of the macro cell (cell 0). The pico cells (cells 1 to 3) have lower transmission power than the macro cell (cell 0), and therefore may be referred to as "low power cells." While the macro cell (cell 0) and the pico cells (cells 1 to 3) may be allocated different frequency bands, the same frequency band 2 is allocated to pico cells 1 to 3, as shown in FIG. 2B. Here, frequency band 1 is allocated to the macro cell (cell 0), and frequency band 2, which is different from the frequency band 1, is allocated to the pico cells (cells 1 to 3).

When, in the system configurations shown in FIGs. 2A and 2B, CoMP transmission (JT) is applied to a plurality of pico cells (cells 1 to 3) that use the same frequency band 2, there are four patterns of combinations of multiple cells that carry out joint transmission, namely "cells 1+2," "cells 1+3," "cells 1+2+3," and "cells 2+3."

CoMP transmission (DPS and CS/CB) is applicable to the four cells (cells 0 to 3), including the macro cell (cell 0). As for the transmitting cells to carry out CoMP transmission, there are four patterns, namely cell 0, cell 1, cell 2 and cell 3.

Consequently, when an attempt is made to apply CoMP transmission to the system configurations shown in FIGs. 2A and 2B, there are eight patterns of transmitting cells or their combinations.

As noted earlier, in LTE-A (Rel. 10), cross-carrier scheduling to schedule the PDSCHs of a plurality of component carriers from the PDCCH of one cell, in carrier aggregation using a plurality of component carriers (primary + one or a plurality of secondary cells), has been introduced. In cross-carrier scheduling, a CIF (Cell Index Field) is defined in DCI so that, it is possible to identify which PDCCH is to receive which cell's PDSCH.

The present inventors have focused on using of the CIF defined in DCI to report transmitting cells or combinations of transmitting cells to a user terminal UE when CoMP is applied.

First, a case will be considered here where DPS and CS/CB of CoMP are applied to four cells (cells 0 to 3).

As shown in FIG. 2C, in DPS and CS/CB of CoMP, too, when the PDSCHs of multiple cells (cells 0 to 3) are scheduled from one cell (cell 0) to (cross carrier scheduling), it is possible to transmit the PDCCHs (DCI) for the PDSCHs transmitted from each cell 0 to 3, using PDCCH resources for cell 0, which serves as a special cell.

In cross-carrier scheduling, it is necessary to identify which cell's PDCCH the PDCCHs (DCI) of multiple cells gathered and transmitted in PDCCH resources for the special cell each are. So, a CIF for identifying the cells the PDCCHs correspond is attached the DCI of each cell's PDCCH. By this means, it is possible to identify the cell each PDCCH corresponds, based on the bit information constituting the CIF.

That is, by allowing the radio base station apparatus eNB and the user terminal UE to hold a common CIF table such as the one shown in FIG. 2E, it is possible to identify the cells of the PDCCHs based on CIF bit information reported from the radio base station apparatuses eNB. FIG. 2D is a conceptual diagram of the DCI format included in the PDCCH, and shows a state in which bit data to represent the transmitting cells upon CoMP transmission is written in the CIF. The CIF is allocated three bits.

For example, according to the table shown in FIG. 2E, if the bit information (000) is included in the CIF provided in the DCI of a PDCCH that is received, this PDCCH is identified to be one for receiving the PDSCH of cell 0. Similarly, when bit information (001), (010) and (011) are included in the CIFs, this indicates that the PDCCHs provide, respectively, control information for receiving the PDSCHs of cells 1, 2 and 3.

Next, how the combinations of transmitting cells (CoMP set) in CoMP joint transmission should be signaled to a user terminal UE will be contemplated. In the example shown in FIG. 2D, the idea of the CIF in LTE-A (Rel. 10) is applied as is when a transmitting cell in CoMP transmission (DPS and CS/CB) serves as one coordinated cell, so that it is possible to set CIF bit information to one of (000), (001), (010) and (011).

In the event of CoMP joint transmission, it is preferable to send signaling in the form of combinations of transmitting cells (CoMP set) from the perspective of reducing overhead. That is, each CoMP set "cells 1+2," "cells 1+3," "cells 1+2+3" or "cells 2+3" is signaled to a user terminal UE. For example, when the CIF is formed with three bits as shown in FIG. 2D, bit data can be generated in eight patterns. Consequently, apart from the four patterns of CIF bit information in the table shown in FIG. 2E, four patterns of CIF bit information remain unused. The present inventor has focused on the fact that there are unused bit data resources in the CIF formed with three bits, and found out that this CIF bit information can be used as bit data to represent CoMP sets when joint transmission is applied.

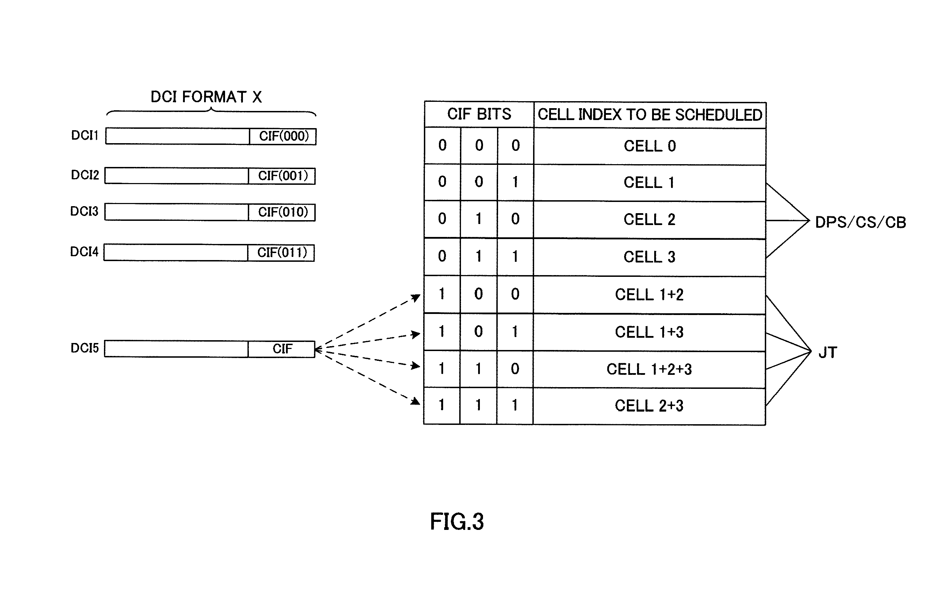

FIG. 3 shows a CIF table in which the unused CIF bit information (100), (101), (110) and (111) are allocated to each CoMP set in joint transmission. The CIF table shown in this drawing maps cell 0 to cell 3, which serve as individual coordinated cells, to the bit information (000), (001), (010) and (011), respectively, and maps CoMP sets (cells 1+2), (cells 1+3), (cells 1+2+3) and (cells 2+3) to the bit information (100), (101), (110) and (111), respectively. According to the CIF table shown in FIG. 3, for example, when (100) is detected as CIF bit information, the user terminal UE can determine that this is the PDCCH for the CoMP set (cells 1+2), and receives (demodulates) the PDSCH transmitted from cell 1 and cell 2 in joint transmission, based on this PDCCH. Note that the CIFs having the bit information (100), (101), (110) or (111) are attached to DCI 5.

Now, a radio communication system according to an embodiment of the present invention will be described in detail. Referring to the system configuration shown in FIG. 2A, first, when the user terminal UE establishes a control channel (RRC connection), the user terminal UE reports its terminal capabilities (UE capabilities) to the radio base station apparatus eNB of the serving cell.

The user terminal UE feeds back channel quality information (CQI: Channel Quality Indicator) that is generated, to the radio base station apparatus eNB.

The radio base station apparatus eNB learns the communication capabilities of the connecting user terminal UE based on the reported terminal capabilities of the user terminal UE. If the user terminal UE supports CoMP transmission, the radio base station apparatus eNB reports measurement candidate cells to the user terminal UE by means of an RRC (Radio Resource Control) protocol control signal. The user terminal UE measures each measurement candidate cell's RSRP (Reference Signal Received Power) and so on, and reports a measurement report result to the radio base station apparatus eNB through higher layer signaling (for example, RRC signaling).

The radio base station apparatus eNB determines CoMP candidate cells from the measurement candidate cells based on the measurement report result. These CoMP candidate cells may include individual coordinated cells that serve as transmission points in CoMP transmission (DPS and CS/CB), and CoMP sets to show the combinations of multiple cells that serve as transmitting cells in CoMP joint transmission (JT). Then, the radio base station apparatus eNB maps indices to represent the individual coordinated cells (including the serving cell) among the CoMP candidate cells and CoMP set indices to bit data, and generates a CIF table such as the one shown in FIG. 3. This CIF table is signaled to the user terminal UE by, for example, RRC signaling.

The radio base station apparatus eNB determines the CoMP transmission cells to transmit the shared data channel to the user terminal UE based on CQIs fed back from the user terminal UE. When CoMP joint transmission is applied, the radio base station apparatus eNB generates downlink control information (DCI), in which the index of this CoMP set is written in the CIF, with respect to the physical downlink control channel (PDCCH) shared between the multiple cells that carry out joint transmission (JT).

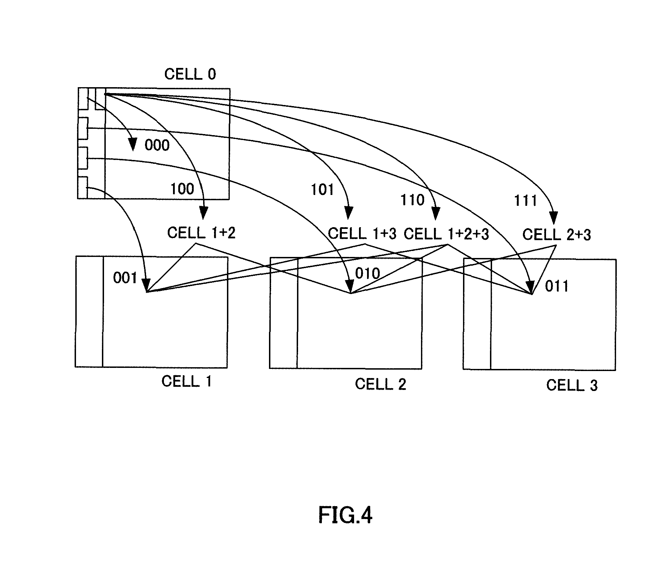

FIG. 4 is a diagram to show allocation of the PDCCH when cross-carrier scheduling is applied to the system configuration shown in FIG. 2A. When DPS and CS/CB of CoMP are applied, PDCCHs (DCI) for the PDSCHs transmitted from each cell 0 to 3 are transmitted using PDCCH resources for cell 0, which serves as a special cell.

When CoMP joint transmission (JT) is applied, PDCCHs (DCI) for the PDSCHs transmitted from the CoMP sets (cells 1+2), (cells 1+3), (cells 1+2+3) and (cells 2+3) are transmitted using the PDCCH of cell 0, which serves as a special cell.

For example, when DPS and CS/CB of CoMP are applied and cell 1 is selected as a CoMP transmission cell, according to the table shown in FIG. 3, this cell 1 is mapped to the bit information (001), so that the radio base station apparatus eNB of the special cell generates DCI in which the bit information of cell 1 is incorporated in the CIF. Then, as shown in FIG. 4, the radio base station apparatus eNB of cell 0, which is the special cell, transmits a PDCCH to include this DCI.

When CoMP joint transmission (JT) is applied and the CoMP set (cells 1+2) is selected as CoMP transmission cells, according to the table shown in FIG. 3, this CoMP set is mapped to the bit information (100), so that the radio base station apparatus eNB of the special cell generates DCI, in which the bit information of the CoMP set (cells 1+2) is incorporated in the CIF. Then, as shown in FIG. 4, the radio base station apparatus eNB of cell 0, which is the special cell, transmits a PDCCH to include this DCI.

When CoMP transmission is applied, the user terminal UE receives the PDCCH from the radio base station apparatus eNB of cell 0, which is the special cell, and also receives the physical downlink shared data channel (PDSCH) from the radio base station apparatuses of all CoMP transmission cells. Then, the user terminal UE analyzes the indices of CoMP transmission cells incorporated in the CIF in the DCI included in the PDCCH received from the special cell, using the table shown in FIG. 3, and specifies the CoMP transmission cells from the CIF bit information. By this means, the PDCCH received from the special cell and the PDSCH received from the transmitting cells are associated with each other, so that the PDSCH can be demodulated based on the DCI of the PDCCH that is associated.

As described above, by mapping indices to represent individual coordinated cells to serve as transmission points in CoMP transmission and indices of CoMP sets showing the combinations of multiple cells to carry out joint transmission in CoMP transmission, to CIF bit data, it is possible to realize signaling of cell index information that is suitable for CoMP transmission/reception techniques.

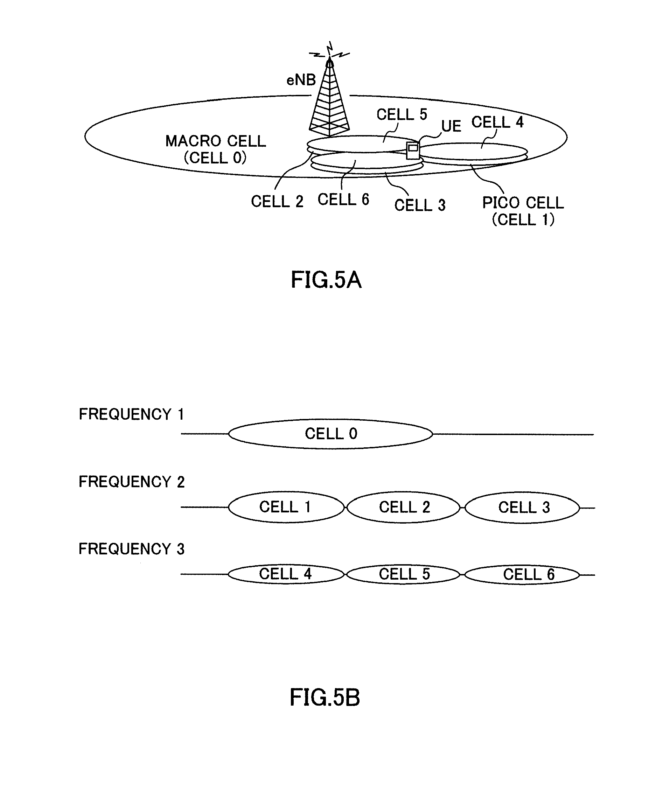

When the number of CIF bits is fixed to three bits, depending on the system configuration, there is a possibility that not all the CoMP sets can be mapped to CIF bit information. FIGs. 5A and 5B show system configurations in which cells 4 to 6 are frequency-multiplexed with cells 1 to 3. Frequency band 2 is allocated to cells 1 to 3, and frequency band 3 is allocated to cells 4 to 6. In this system configuration, there are seven cells in all that are subject to CoMP, and there are six cells (cell 1 to cell 6) in all that may serve as CoMP sets to carry out joint transmission.

In the case shown in FIG. 5, when carrying out CoMP transmission (JT) to utilize cells 1 to 3, the CoMP sets are four types, namely "cells 1+2," "cells 1+3," "cells 1+2+3," and "cells 2+3." When carrying out CoMP transmission (JT) to utilize cells 4 to 6, the CoMP sets are four types, namely "cells 4+5," "cells 4+6," "cells 4+5+6," and "cells 5+6." In addition to these, four types of cells, namely cell 0, cell 1, cell 2 and cell 3, are the cells to carry out CoMP transmission apart from joint transmission (DPS and CS/CB). That is, a total of twelve types of cell information need to be represented using eight types of CIF bit information, and the CIF bit information runs short.

### <First table configuration method>

For a first method, a method of configuring a CIF table by excluding CoMP sets that are formed with cells of low received quality (for example, RSRP: Reference Signal Received Power) may be possible. In this case, the radio base station apparatus eNB utilizes the results of measurements by the user terminal UE, and determines cells of high received quality as CoMP set candidates.

The table configuration method in this case will be described in detail. In the system configuration shown in FIG. 5A, the radio base station apparatus eNB reports measurement candidate cells to the user terminal UE by means of an RRC (Radio Resource Control) protocol control signal. The user terminal UE measures each measurement candidate cell's RSRP and so on, and reports a measurement report result to the radio base station apparatus eNB through higher layer signaling (for example, RRC signaling).

The radio base station apparatus eNB determines CoMP candidate cells among the measurement candidate cells based on the measurement report result. The CoMP candidate cells are determined such that, for example, CoMP sets formed with combinations where the quality of communication fails to fulfill the quality requirement are not included. Whether or not the quality requirement is fulfilled is estimated based on, for example, whether or not the RSRPs of the measurement candidate cells exceed a threshold value, the relationship between the measurement candidate cells in the scale of the RSRP, and so on.

For example, when, in the system configuration shown in FIG. 5A, the received quality of cell 3 is relatively low, and the relationship RSRP Cell 1 > RSRP Cell 2 > RSRP Cell 3 holds, the two CoMP sets "cells 1+2" and "cells 1+2+3," which exclude the CoMP sets to include cell 3that is, "cells 1+3" and "cells 2+3" -- are determined as CoMP candidate cells.

Similarly, when the received quality of cell 6 is low and the relationship RSRP Cell 4 > RSRP Cell 5 > RSRP Cell 6 holds, the two CoMP sets "cells 4+5" and "cells 4+5+6," which exclude the CoMP sets to include cell 6 -- that is, "cells 4+6" and "cells 5+6" -- are determined as CoMP candidate cells.

As for whether to carry out CoMP transmission (JT) in cells 1 to 3 or carry out CoMP transmission (JT) in cells 4 to 6, the radio base station apparatus eNB can freely determine this based on the communication environment or upon request from the user terminal.

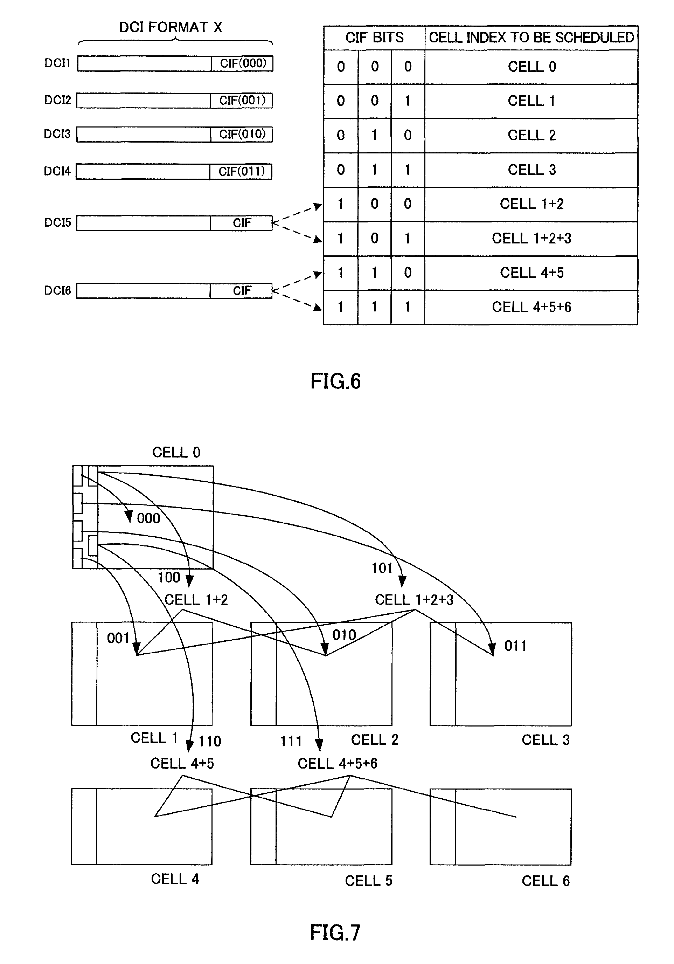

Then, the radio base station apparatus eNB maps indices to represent the individual coordinated cells selected as CoMP candidate cells and CoMP set indices to bit data, and generates a CIF table such as the one shown in FIG. 6. In the CIF table shown in FIG. 6, cell 0 to cell 3 to serve as individual coordinated cells are mapped to the bit information (000), (001), (010) and (011), respectively. The CoMP sets (cells 1+2), (cells 1+2+3), (cells 4+5) and (cells 4+5+6) are mapped to the bit information (100), (101), (110) and (111), respectively. Note that the CIFs having either the bit information (100) or (101) are attached to DCI 5. The CIFs having either the bit information (110) or (111) are attached to DCI 6.

According to the CIF table shown in FIG. 6, for example, when (100) is detected as CIF bit information, the user terminal UE can determine that this is the PDCCH for the CoMP set (cells 1+2), and receives (demodulates) the PDSCH transmitted from cell 1 and cell 2 in joint transmission, based on this PDCCH. This CIF table is signaled to the user terminal UE by, for example, RRC signaling.

The radio base station apparatus eNB determines the CoMP transmission cells to transmit the shared data channel to the user terminal UE based on CQIs fed back from the user terminal UE. Then, when CoMP joint transmission (JT) is applied, the radio base station apparatus eNB generates downlink control information (DCI), in which the index of this CoMP set is written in the CIF, with respect to the physical downlink control channel (PDCCH) shared between the multiple cells that form the CoMP set.

FIG. 7 is a diagram to show allocation of the PDCCH when cross-carrier scheduling is applied to the system configuration shown in FIG. 5A. When DPS and CS/CB of CoMP are applied, PDCCHs (DCI) for the PDSCHs transmitted from each cell 0 to 3 are transmitted using PDCCH resources for cell 0, which serves as a special cell.

When CoMP joint transmission (JT) is applied, PDCCHs (DCI) for the PDSCHs transmitted from the CoMP sets (cells 1+2), (cells 1+2+3), (cells 4+5) and (cells 4+5+6) are transmitted using the PDCCH of cell 0, which serves as a special cell.

For example, when DPS and CS/CB of CoMP are applied and cell 1 is selected as a CoMP transmission cell, according to the table shown in FIG. 6, this cell 1 is mapped to the bit information (001), so that the radio base station apparatus eNB of the special cell generates DCI in which the bit information of cell 1 is incorporated in the CIF. Then, as shown in FIG. 7, the radio base station apparatus eNB of cell 0, which is the special cell, transmits a PDCCH to include this DCI.

When CoMP joint transmission (JT) is applied and the CoMP set (cells 1+2) is selected as CoMP transmission cells, according to the table shown in FIG. 6, this CoMP set is mapped to the bit information (100), so that the radio base station apparatus eNB of the special cell generates DCI, in which the bit information of the CoMP set (cells 1+2) is incorporated in the CIF. Then, as shown in FIG. 7, the radio base station apparatus eNB of cell 0, which is the special cell, transmits a PDCCH to include this DCI.

When CoMP transmission (JT) is applied and the CoMP set (cells 4+5) is selected as CoMP transmission cells, according to the table shown in FIG. 6, this CoMP set is mapped to the bit information (110), so that the radio base station apparatus eNB of the special cell generates DCI, in which the bit information of the CoMP set (cells 4+5) is incorporated in the CIF. Then, as shown in FIG. 7, the radio base station apparatus eNB of cell 0, which is the special cell, transmits a PDCCH to include this DCI.

When CoMP transmission is applied, the user terminal UE receives the PDCCH from the radio base station apparatus eNB of cell 0, which is the special cell, and also receives the physical downlink shared data channel (PDSCH) from the radio base station apparatuses of all CoMP transmission cells. Then, the user terminal UE analyzes the indices of CoMP transmission cells incorporated in the CIF in the DCI included in the PDCCH received from the special cell, using the table shown in FIG. 6, and specifies the CoMP transmission cells. By this means, the PDCCH received from the special cell and the PDSCH received from the transmitting cells are associated with each other, so that the PDSCH can be demodulated based on the DCI of the PDCCH that is associated.

By this means, even when CIF bit information runs short, it is still possible to generate a CIF table in which CoMP candidate cells are mapped, and carry out cross-carrier scheduling.

### <Second table configuration method>

As for a second method, a method of forming a CIF table by excluding cells of low received quality (for example, RSRP) may be possible. In this case, the radio base station apparatus eNB utilizes the results of measurements by the user terminal UE, and determines cells of high received quality as CoMP cell candidates.

The table configuration method in this case will be described in detail. In the system configuration shown in FIG. 5A, the radio base station apparatus eNB reports measurement candidate cells to the user terminal UE by means of an RRC protocol control signal. The user terminal UE measures each measurement candidate cell's RSRP and so on, and reports a measurement report result to the radio base station apparatus eNB through higher layer signaling (for example, RRC signaling).

The radio base station apparatus eNB determines CoMP candidate cells from the measurement candidate cells based on the measurement report result. The CoMP candidate cells are determined such that, for example, part or all of the coordinated cells where the quality of communication fails to fulfill the quality requirement are not included. Whether or not the quality requirement is fulfilled is estimated based on, for example, whether or not the RSRPs of the measurement candidate cells exceed a threshold value, the relationship between the measurement candidate cells in the scale of the RSRP, and so on.

For example, in the system configuration shown in FIG. 5A, when the received quality of cell 3 is relatively low and the relationship RSRP Cell 1 > RSRP Cell 2 > RSRP Cell 3 holds, cell 3 is excluded so as not to be used in the signal processing for transmission/reception for the user terminal UE. By this means, cell 3 is prevented from being a CoMP candidate cell, and CoMP sets to include cell 3 are prevented from being CoMP candidate cells.

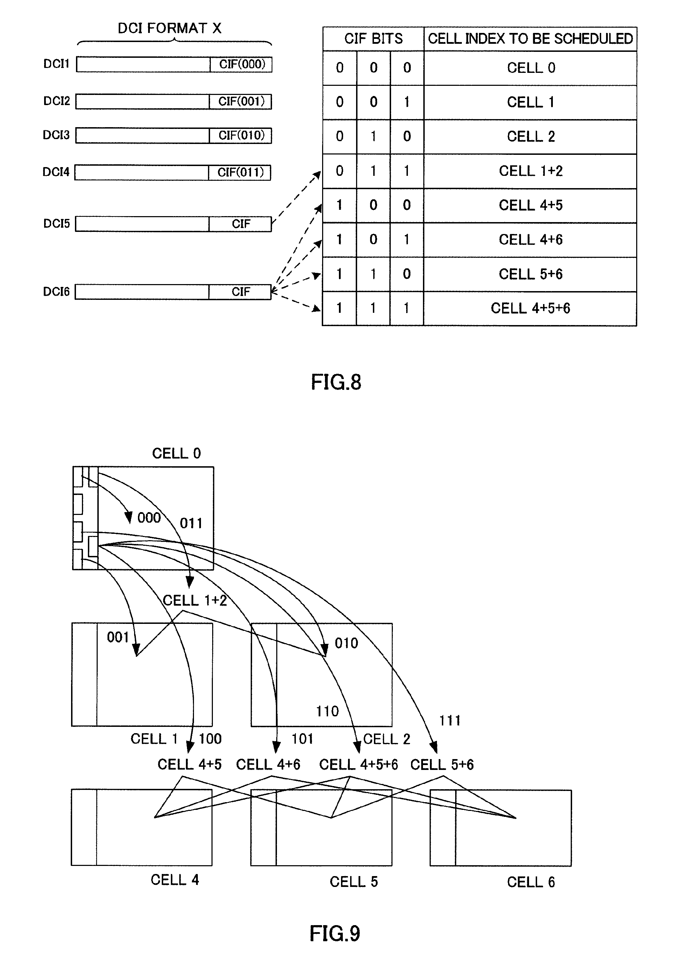

Then, the radio base station apparatus eNB maps indices to represent the individual coordinated cells selected as CoMP candidate cells, not including cell 3, and CoMP set indices to bit data, and generates a CIF table such as the one shown in FIG. 8. In the CIF table shown in FIG. 8, cell 0 to cell 2 to serve as individual coordinated cells are mapped to the bit information (000), (001) and (010), respectively. The CoMP sets (cells 1+2), (cells 4+5), (cells 4+6), (cells 5+6), and (cells 4+5+6) are mapped to the bit information (011), (100), (101), (110) and (111), respectively. Note that the CIFs having the bit information (011) are attached to DCI 5. The CIFs having either the bit information (100), (101), (110) or (111) are attached to DCI 6.

According to the CIF table shown in FIG. 8, for example, when (100) is detected as CIF bit information, the user terminal UE can determine that this is the PDCCH for the CoMP set (cells 4+5), and receives (demodulates) the PDSCH transmitted from cell 4 and cell 5 in joint transmission, based on this PDCCH. This CIF table is signaled to the user terminal UE by, for example, RRC signaling.

The radio base station apparatus eNB determines the CoMP transmission cells to transmit the shared data channel to the user terminal UE based on CQIs fed back from the user terminal UE. Then, when CoMP joint transmission (JT) is applied, the radio base station apparatus eNB generates downlink control information (DCI), in which the index of this CoMP set is written in the CIF, with respect to the physical downlink control channel (PDCCH) shared between the multiple cells that form the CoMP set.

FIG. 9 is a diagram to show allocation of the PDCCH when cross-carrier scheduling is applied to the system configuration shown in FIG. 5A. When DPS and CS/CB of CoMP are applied, PDCCHs (DCI) for the PDSCHs transmitted from each cell 0 to 2 are transmitted using PDCCH resources for cell 0, which serves as a special cell.

When CoMP joint transmission (JT) is applied, PDCCHs (DCI) for the PDSCHs transmitted from the CoMP sets (cells 1+2), (cells 4+5), (cells 4+6), (cells 5+6) and (cells 4+5+6) are transmitted using the PDCCH of cell 0, which serves as a special cell.

For example, when DPS and CS/CB of CoMP are applied and cell 1 is selected as a CoMP transmission cell, according to the table shown in FIG. 8, this cell 1 is mapped to the bit information (001), so that the radio base station apparatus eNB of the special cell generates DCI in which the bit information of cell 1 is incorporated in the CIF. Then, as shown in FIG. 9, the radio base station apparatus eNB of cell 0, which is the special cell, transmits a PDCCH to include this DCI.

When CoMP joint transmission (JT) is applied and the CoMP set (cells 1+2) is selected as CoMP transmission cells, according to the table shown in FIG. 8, this CoMP set is mapped to the bit information (011), so that the radio base station apparatus eNB of the special cell generates DCI, in which the bit information of the CoMP set (cells 1+2) is incorporated in the CIF. Then, as shown in FIG. 9, the radio base station apparatus eNB of cell 0, which is the special cell, transmits a PDCCH to include this DCI.

When CoMP transmission (JT) is applied and the CoMP set (cells 4+5) is selected as CoMP transmission cells, according to the table shown in FIG. 8, this CoMP set is mapped to the bit information (100), so that the radio base station apparatus eNB of the special cell generates DCI, in which the bit information of the CoMP set (cells 4+5) is incorporated in the CIF. Then, as shown in FIG. 9, the radio base station apparatus eNB of cell 0, which is the special cell, transmits a PDCCH to include this DCI.

When CoMP transmission is applied, the user terminal UE receives the PDCCH from the radio base station apparatus eNB of cell 0, which is the special cell, and also receives the physical downlink shared data channel (PDSCH) from the radio base station apparatuses of all CoMP transmission cells. Then, the user terminal UE analyzes the indices of CoMP transmission cells incorporated in the CIF in the DCI included in the PDCCH received from the special cell, using the table shown in FIG. 8, and specifies the CoMP transmission cells. By this means, the PDCCH received from the special cell and the PDSCH received from the transmitting cells are associated with each other, so that the PDSCH can be demodulated based on the DCI of the PDCCH that is associated.

By this means, even when CIF bit information runs short, it is still possible to generate a CIF table in which CoMP candidate cells are mapped, and carry out cross-carrier scheduling.

### <Third table configuration method>

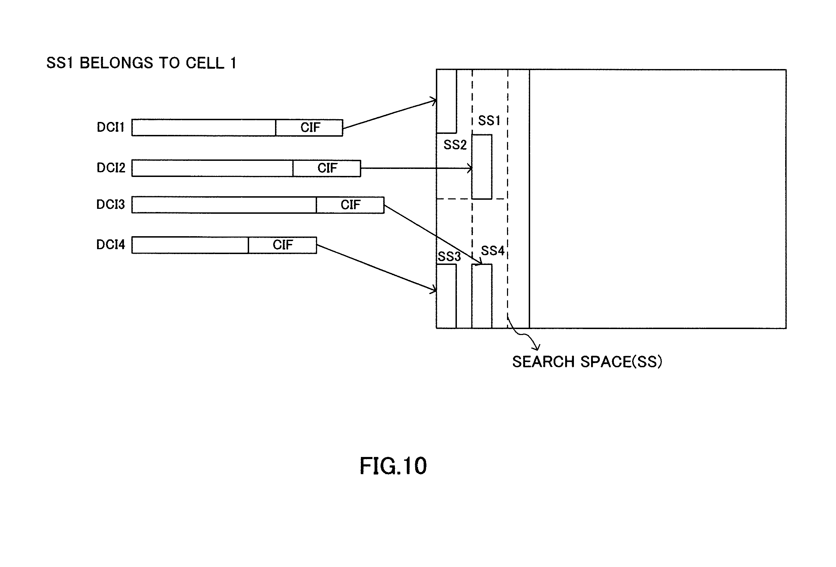

FIG. 10 shows an example of allocation of search spaces in each cell when the size of DCI varies in carrier aggregation. The DCI size may vary due to differences in the system band, the type of the DCI format and so on. In the example shown in FIG. 10, cell 0 to cell 3 have varying DCI sizes.

In this case, as shown in FIG. 10, search spaces SS 1 to SS 4 for cell 0 to cell 3 are arranged in mutually varying fields. For example, the user terminal UE blind-decodes search space SS 1 allocated to cell 0 based on the DCI size of cell 0, and decodes the DCI of cell 0. As for the rest of cell 1 to cell 3, similarly, search spaces SS 2 to SS 4 allocated to cells 1 to 3 are blind-decoded based on the DCI sizes of cells 1 to 3, so that the DCI of cells 1 to 3 is decoded.

Consequently, the user terminal UE can determine the single cell (cells 0 to 3) to which the PDSCH is allocated, by identifying the search spaces by means of DCI of varying sizes. Consequently, the cell indices that can be identified by means of these search spaces need not be mapped to bit data in the CIF table.

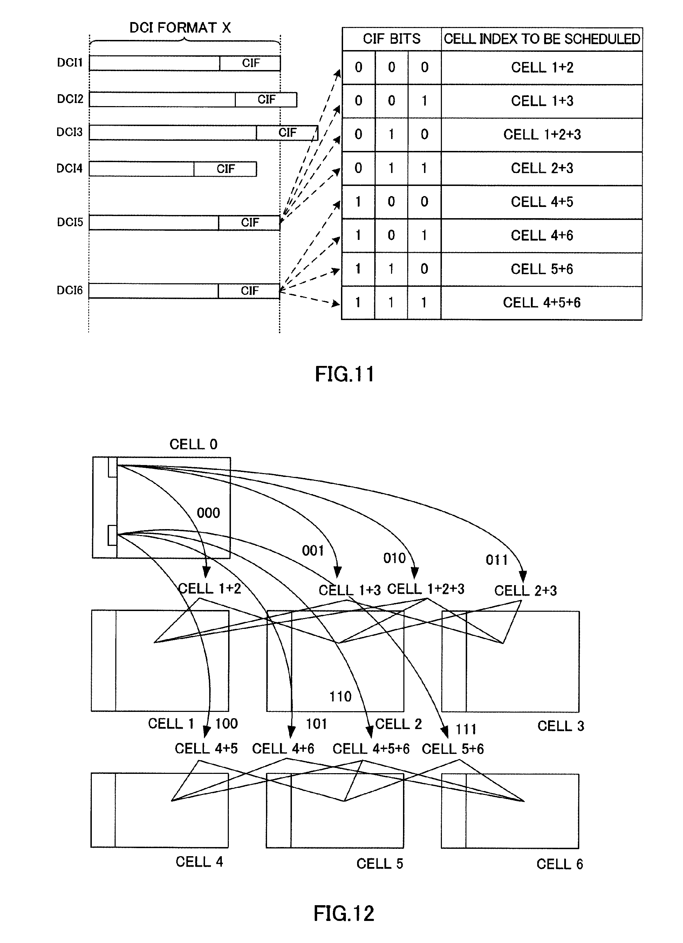

So, the radio base station apparatus eNB excludes individual cells (cell 0 to cell 3 in FIG. 10) that can be identified based on search spaces from the CoMP candidate cells registered with the CIF table. The radio base station apparatus eNB determines CoMP candidate cells from the measurement candidate cells based on the measurement report result from the user terminal UE, not including the cells that can be identified by means of search spaces, and generates a CIF table such as the one shown in FIG. 11. In the CIF table shown in FIG. 11, the CoMP sets (cells 1+2), (cells 1+3), (cells 1+2+3), (cells 2+3), (cells 4+5), (cells 4+6), (cells 5+6) and (cells 4+5+6) are mapped to the bit information (000), (001), (010), (011), (100), (101), (110) and (111), respectively. Note that CIF to carry one of the bit information (000), (001), (010) and (011) is attached to DCI 5. CIF to carry one of bit information (100), (101), (110), and (111) is attached to DCI6.

According to the CIF table shown in FIG. 11, for example, when (100) is detected as CIF bit information, the user terminal UE can determine that this is the PDCCH for the CoMP set (cells 4+5), and receives (demodulates) the PDSCH transmitted from cell 4 and cell 5 in joint transmission, based on this PDCCH. This CIF table is signaled to the user terminal UE by, for example, RRC signaling.

The radio base station apparatus eNB determines the CoMP transmission cells to transmit the shared data channel to the user terminal UE based on CQIs fed back from the user terminal UE. If the CoMP transmission cells can be identified by means of search spaces, signaling may be carried out using the search spaces. When the CoMP transmission cells cannot be identified by search spaces, if CoMP candidates registered with the CIF table are included in CoMP joint transmission, the radio base station apparatus eNB generates downlink control information (DCI) in which the index of this CoMP set is written in the CIF, with respect to the physical downlink control channel (PDCCH) shared between the multiple cells that carry out this joint transmission (JT).

FIG. 12 is a diagram to show allocation of the PDCCH when cross-carrier scheduling is applied. When CoMP joint transmission (JT) is applied, PDCCHs (DCI) for the PDSCHs transmitted from the CoMP sets (cells 1+2), (cells 1+3), (cells 1+2+3), (cells 2+3), (cells 4+5), (cells 4+6), (cells 5+6) and (cells 4+5+6) are transmitted using the PDCCH of cell 0, which serves as a special cell.

When CoMP joint transmission (JT) is applied and the CoMP set (cells 1+2) is selected as CoMP transmission cells, according to the table shown in FIG. 11, this CoMP set is mapped to the bit information (000), so that the radio base station apparatus eNB of the special cell generates DCI, in which the bit information of the CoMP set (cells 1+2) is incorporated in the CIF. Then, as shown in FIG. 12, the radio base station apparatus eNB of cell 0, which is the special cell, transmits a PDCCH to include this DCI.

When CoMP transmission (JT) is applied and the CoMP set (cells 4+5) is selected as CoMP transmission cells, according to the table shown in FIG. 11, this CoMP set is mapped to the bit information (100), so that the radio base station apparatus eNB of the special cell generates DCI, in which the bit information of the CoMP set (cells 4+5) is incorporated in the CIF. Then, as shown in FIG. 12, the radio base station apparatus eNB of cell 0, which is the special cell, transmits a PDCCH to include this DCI.

When CoMP transmission is applied, the user terminal UE receives the PDCCH from the radio base station apparatus eNB of cell 0, which is the special cell, and also receives the physical downlink shared data channel (PDSCH) from the radio base station apparatuses of all CoMP transmission cells. Then, the user terminal UE analyzes the indices of CoMP transmission cells incorporated in the CIF in the DCI included in the PDCCH received from the special cell, using the table shown in FIG. 11, and specifies the CoMP transmission cells. By this means, the PDCCH received from the special cell and the PDSCH received from the transmitting cells are associated with each other, so that the PDSCH can be demodulated based on the DCI of the PDCCH that is associated.

By this means, it is possible to reduce the number of CoMP candidate cells to be represented by CIF bit information.

### <Fourth Table Configuration Method>

Cell indices to be registered with the CIF table may be expanded so that subframe information can be included. That is, in addition to information related to transmitting cells or CoMP sets, subframe numbers in predetermined intervals are also included and mapped to bit data.

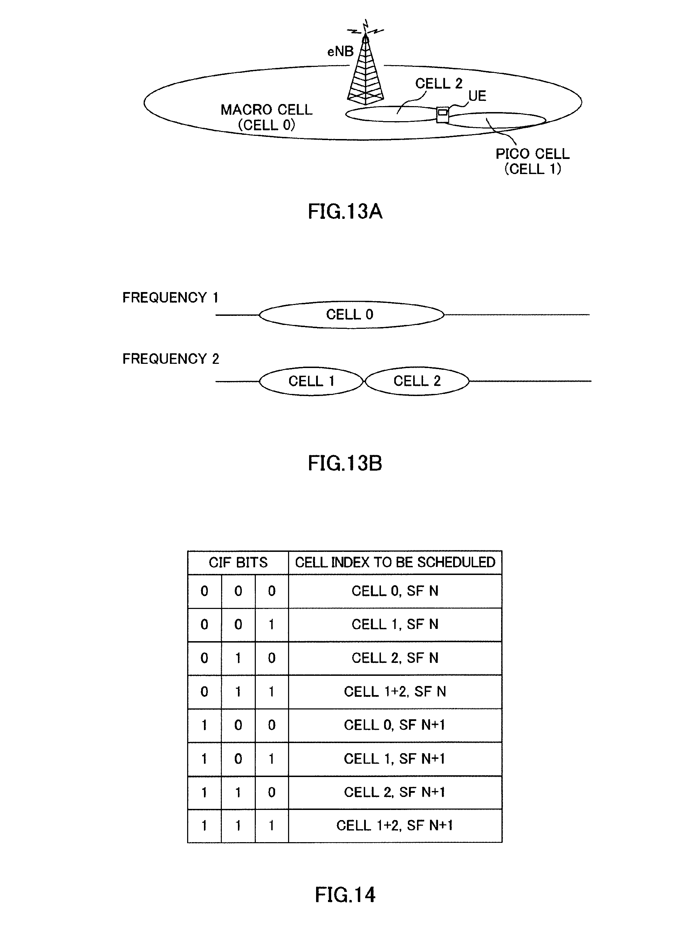

For example, when the number of CIF bits is limited to three bits, depending on the system configuration, there is a possibility that there is unused CIF bit information on the CIF table. In FIG. 13A, a macro cell (cell 0) having a coverage area of a wide range and a plurality of pico cells (cells 1 and 2) having local coverage areas are combined and arranged. While the macro cell (cell 0) and the pico cells (cells 1 and 2) may be allocated different frequency bands, it is equally possible to allocate the same frequency band 2 to pico cells 1 and 2, as shown in FIG. 13B. Here, frequency band 1 is allocated to the macro cell (cell 0), and frequency band 2, which is different from the frequency band 1, is allocated to the pico cells (cells 1 and 2).

When CoMP transmission (JT) is applied to a plurality of pico cells (cells 1 and 2) using the same frequency band 2 in the system configurations shown in FIGs. 13A and 13B, "cells 1+2" is the only combination of multiple cells to carry out joint transmission. CoMP transmission (DPS and CS/CB) is applicable to three cells (cells 0 to 2) including the macro cell (cell 0). In this case, there are three patterns of transmitting cells to carry out CoMP transmission, namely cell 0, cell 1 and cell 2.

Consequently, when an attempt is made to apply CoMP transmission to the system configurations shown in FIGs. 13A and 13B, there are four patterns of transmitting cells or their combinations. When the CIF is formed with three bits, eight patterns of bit data can be generated, so that, in this case, unused bit data resources are produced. For example, when CIF bit information (000), (001), (010) and (011) are used in mapping of CoMP candidate cells in the system configurations shown in FIGs. 13A and 13B, the CIF bit information (100), (101), (110) and (111) are unused.

In this case, the unused bit data resources can be used in cross-subframe scheduling. FIG. 14 shows a CIF table in cross-subframe scheduling, in which the CoMP candidate cells (cell 0), (cell 1), (cell 2) and (cells 1+2) in subframe N are mapped to the CIF bit information (000), (001), (010) and (011), respectively, and in which the CoMP candidate cells (cell 0), (cell 1), (cell 2) and (cells 1+2) in subframe N+1 are mapped to the unused CIF bit information (100), (101), (110) and (111), respectively. That is, which subframe (in sequential order) of which cell the control information of the PDCCH which the user terminal receives in a given subframe pertains to, can be identified.

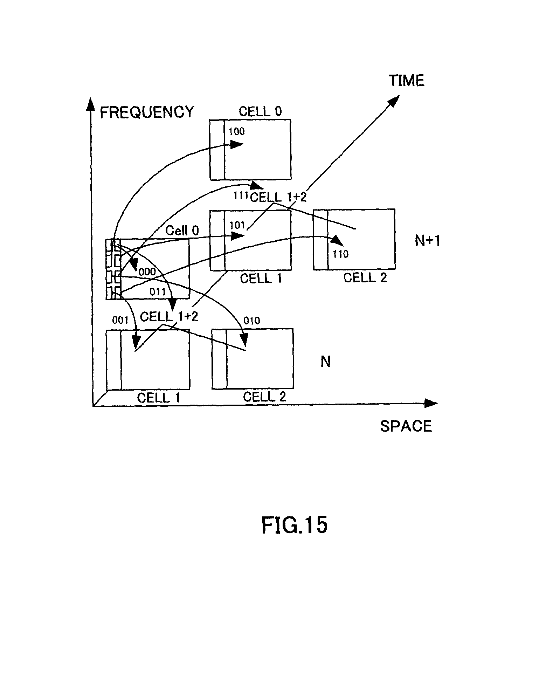

The radio base station apparatus eNB generates downlink control information (DCI), in which the indices of CoMP transmission cells are incorporated in the physical downlink control channel (PDCCH) that is shared between multiple cells that carry out cross-subframe scheduling between subframe N and subframe N+1. As shown in FIG. 15, each cell's PDCCH including DCI that is generated in this way is transmitted from the radio base station apparatus eNB of cell 0 in subframe N to multiple cells in subframe N, or to multiple cells in subframe N+1.

By this means, it becomes possible to designate the indices of CoMP transmission cells between multiple subframes.

### (Configuration of Radio Communication System)

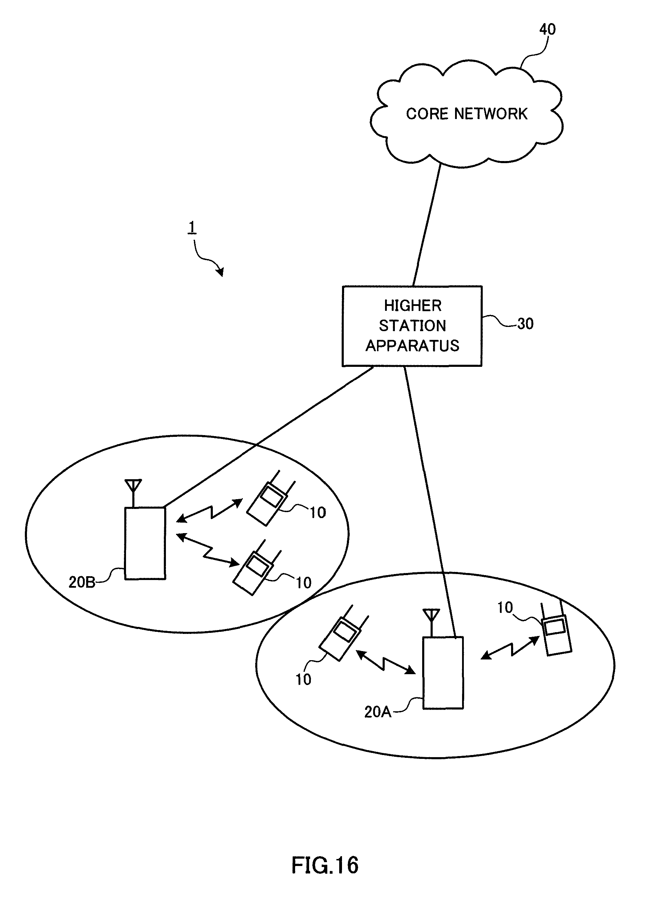

Now, a radio communication system according to the present embodiment will be described in detail. FIG. 16 is a diagram to explain a system configuration of a radio communication system according to the present embodiment. Note that the radio communication system shown in FIG. 16 is a system to accommodate, for example, the LTE system or SUPER 3G. In this radio communication system, carrier aggregation to group a plurality of fundamental frequency blocks into one, where the system band of the LTE system is one unit, is used. This radio communication system may be referred to as "IMT-Advanced" or may be referred to as "4G."

As shown in FIG. 16, a radio communication system 1 is configured to include base station apparatuses 20A and 20B of individual transmission points, and user terminals 10 that communicate with these base station apparatuses 20A and 20B. The base station apparatuses 20A and 20B are connected with a higher station apparatus 30, and this higher station apparatus 30 is connected with a core network 40. The base station apparatuses 20A and 20B are connected with each other by wire connection or by wireless connection. The user terminals 10 are able to communicate with the base station apparatuses 20A and 20B, which serve as transmission points. Note that the higher station apparatus 30 includes, for example, an access gateway apparatus, a radio network controller (RNC), a mobility management entity (MME) and so on, but is by no means limited to these.

Although the user terminals 10 may include both conventional terminals (Rel. 10 LTE) and support terminals (for example, Rel. 11 LTE), the following description will be given simply with respect to "user terminals," unless specified otherwise. For ease of explanation, user terminals 10 will be described to perform radio communication with the base station apparatuses 20A and 20B.

For radio access schemes, in the radio communication system 1, OFDMA (Orthogonal Frequency Division Multiple Access) is adopted on the downlink, and SC-FDMA (Single-Carrier Frequency Division Multiple Access) is adopted on the uplink, but the uplink radio access scheme is by no means limited to this. OFDMA is a multi-carrier transmission scheme to perform communication by dividing a frequency band into a plurality of narrow frequency bands (subcarriers) and mapping data to each subcarrier. SC-FDMA is a single carrier transmission scheme to reduce interference between terminals by dividing, per terminal, the system band into bands formed with one or continuous resource blocks, and allowing a plurality of terminals to use mutually different bands.

Here, communication channels will be described. Downlink communication channels include a PDSCH, which is used by the user terminals 10 on a shared basis as a downlink data channel, and downlink L1/L2 control channels (PDCCH, PCFICH, PHICH). By the PDSCH, transmission data and higher control information are transmitted. By the PDCCH, PDSCH and PUSCH scheduling information and so on are transmitted. The number of OFDM symbols to use for the PDCCH is transmitted by the PCFICH (Physical Control Format Indicator Channel). HARQ ACK and NACK for the PUSCH are transmitted by the PHICH (Physical Hybrid-ARQ Indicator Channel).

Uplink communication channels include a PUSCH (Physical Uplink Shared Channel), which is used by each user terminal on a shared basis as an uplink data channel, and a PUCCH (Physical Uplink Control Channel), which is an uplink control channel. By means of this PUSCH, transmission data and higher control information are transmitted. By the PUCCH, downlink channel state information (CSI (including CQIs and so on)), ACK/NACK and so on are transmitted.

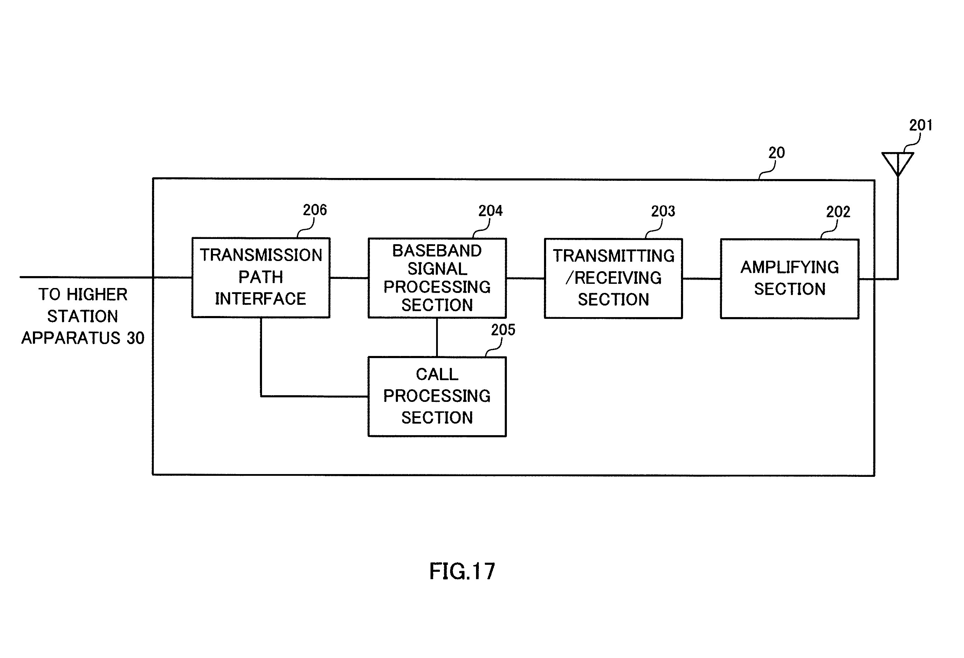

An overall configuration of the base station apparatus according to the present embodiment will be described with reference to FIG. 17. Note that the base station apparatuses 20A and 20B are configured alike and therefore will be described simply as "base station apparatus 20." The base station apparatus 20 has a transmitting/receiving antenna 201, an amplifying section 202, a transmitting/receiving section (reporting section) 203, a baseband signal processing section 204, a call processing section 205 and a transmission path interface 206. Transmission data to be transmitted from the base station apparatus 20 to the user terminal on the downlink is input from the higher station apparatus 30, into the baseband signal processing section 204, via the transmission path interface 206.

In the baseband signal processing section 204, a signal of a downlink data channel is subjected to a PDCP layer process, division and coupling of transmission data, RLC (Radio Link Control) layer transmission processes such as an RLC retransmission control transmission process, MAC (Medium Access Control) retransmission control, including, for example, an HARQ transmission process, scheduling, transport format selection, channel coding, an inverse fast Fourier transform (IFFT) process, and a precoding process. A signal of a physical downlink control channel, which is a downlink control channel, is also subjected to transmission processes such as channel coding, an inverse fast Fourier transform and so on.

The baseband signal processing section 204 reports control information for allowing each user terminal 10 to perform radio communication with the base station apparatus 20, to the user terminals 10 connected to the same transmission point, through a broadcast channel. The information for communication in the transmission point includes, for example, the uplink or downlink system bandwidth, root sequence identification information (root sequence index) for generating random access preamble signals in the PRACH (Physical Random Access Channel), and so on.

The baseband signal that is output from the baseband signal processing section 204 is converted into a radio frequency band in the transmitting/receiving section 203. The amplifying section 202 amplifies the radio frequency signal having been subjected to frequency conversion, and outputs the result to the transmitting/receiving antenna 201.

As for a signal to be transmitted from the user terminal 10 to the base station apparatuses 20 on the uplink, a radio frequency signal that is received in the transmitting/receiving antenna 201 is amplified in the amplifying section 202, converted into a baseband signal through frequency conversion in the transmitting/receiving section 203, and input in the baseband signal processing section 204.

The baseband signal processing section 204 performs an FFT process, an IDFT process, error correction decoding, a MAC retransmission control receiving process, and RLC layer and PDCP layer receiving processes of the transmission data that is included in the baseband signal received on the uplink. The decoded signal is transferred to the higher station apparatus 30 through the transmission path interface 206.

The call processing section 205 performs call processing such as setting up and releasing communication channels, manages the state of the base station apparatus 20 and manages the radio resources.

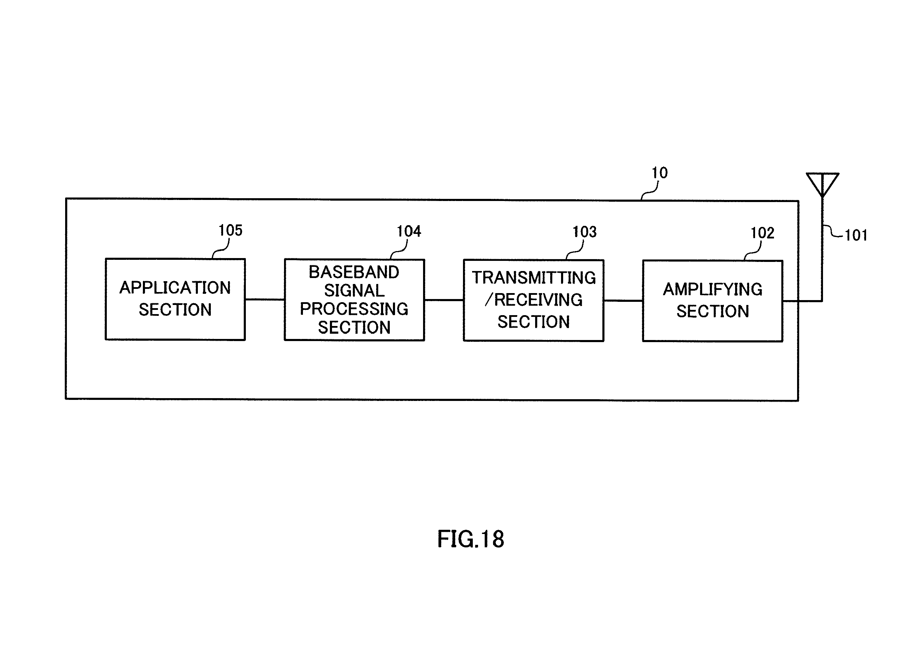

Next, an overall configuration of a user terminal according to the present embodiment will be described with reference to FIG. 18. A user terminal 10 has a transmitting/receiving antenna 101, an amplifying section 102, a transmitting/receiving section (receiving section) 103, a baseband signal processing section 104, and an application section 105.

As for downlink data, a radio frequency signal that is received in the transmitting/receiving antenna 101 is amplified in the amplifying section 102, and subjected to frequency conversion and converted into a baseband signal in the transmitting/receiving section 103. This baseband signal is subjected to receiving processes such as an FFT process, error correction decoding and retransmission control, in the baseband signal processing section 104. In this downlink data, downlink transmission data is transferred to the application section 105. The application section 105 performs processes related to higher layers above the physical layer and the MAC layer. In the downlink data, broadcast information is also transferred to the application section 105.

Meanwhile, uplink transmission data is input from the application section 105 into the baseband signal processing section 104. The baseband signal processing section 104 performs a mapping process, a retransmission control (HARQ) transmission process, channel coding, a DFT process, and an IFFT process. The baseband signal that is output from the baseband signal processing section 104 is converted into a radio frequency band in the transmitting/receiving section 103. After that, the amplifying section 102 amplifies the radio frequency signal having been subjected to frequency conversion, and transmits the result from the transmitting/receiving antenna 101.

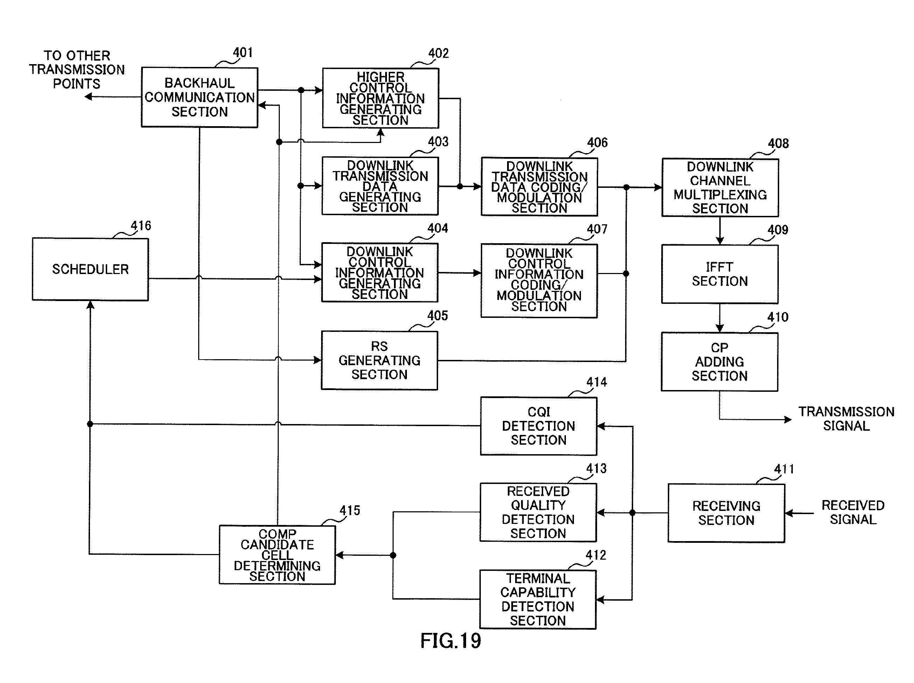

Now, the function blocks of a base station apparatus supporting CoMP transmission will be described with reference to FIG. 19. Note that each function block of FIG. 19 primarily relates to the baseband signal processing section shown in FIG. 17. The functional block diagram of FIG. 19 is simplified to explain the present invention, but is assumed to have configurations which a baseband signal processing section should normally have.

The base station apparatus 20 has, on the transmitting side, a backhaul communication section 401, a higher control information generating section 402, a downlink transmission data generating section 403, a downlink control information generating section 404, an RS generating section 405, a downlink transmission data coding/modulation section 406, and a downlink control information coding/modulation section 407. The base station apparatus 20 has a downlink channel multiplexing section 408, an IFFT section 409 and a CP attaching section 410. The base station apparatus 20 has a receiving section 411, a terminal capability detection section 412, a received quality detection section 413, a CQI detection section 414, a CoMP candidate cell determining section 415, and a scheduler 416.

The backhaul communication section 401 allows communication with other base stations by means of backhaul.

The higher control information generating section 402 generates higher control information to transmit to the user terminal through higher layer signaling (for example, RRC signaling), and outputs the generated higher control information to the downlink transmission data coding/modulation section 406. For example, the higher control information generating section 402 generates higher control information (information related to RS transmission parameters) including the information output from the backhaul communication section 401.

The higher control information generating section 402 generates CIF table information that includes CoMP candidate cells determined in a CoMP candidate cell determining section 415, which will be described later, and outputs the generated information to the downlink transmission data coding/modulation section 406.

The downlink transmission data generating section 403 generates downlink transmission data, and outputs this downlink transmission data to the downlink transmission data coding/modulation section 406. User data as downlink transmission data is supplied from a higher layer.

The downlink control information generating section 404 generates downlink control information (DCI) for controlling the PDSCH using DCI formats (for example, DCI format 1A and so on) which have DL grants as content.

When information about the cells to carry out CoMP transmission or information about the combinations of cells are included in DCI and reported to the user terminal, the downlink control information generating section 404 generates the cell information or cell-combination information. When DPS and CS/CB of CoMP are applied, DCI, in which the indices of transmitting cells upon CoMP transmission are written in the CIF, is generated. When CoMP joint transmission is applied, downlink control information (DCI), in which the index of the CoMP set to carry out joint transmission (JT) is written in the CIF, is generated. The CIF to be attached to DCI then is a CIF that is designated by the scheduler 416 based on the allocation in the CIF table generated in a CoMP candidate cell determining section 415, which will be described later.

The downlink transmission data coding/modulation section 406 performs channel coding and data modulation of the downlink transmission data and the higher control information, and outputs the results to the downlink channel multiplexing section 408. The downlink control information coding/modulation section 407 performs channel coding and data modulation of the downlink control information, and outputs the result to the downlink channel multiplexing section 408.

The RS generating section 405 generates conventional reference signals (CRS, CSI-RS, DM-RS), and, besides, may generate a desired signal measurement RS and an interference measurement RS. These RSs are output to a downlink channel multiplexing section 408.

The downlink channel multiplexing section 408 combines the downlink control information, the RSs, the higher control information and the downlink transmission data, and generates a transmission signal. The downlink channel multiplexing section 408 outputs the generated transmission signal to the IFFT section 409. The IFFT section 409 applies an inverse fast Fourier transform to the transmission signal, and converts the transmission signal from a frequency domain signal to a time domain signal. The transmission signal after the IFFT is output to the CP attaching section 410. The CP attaching section 410 attaches CPs (Cyclic Prefixes) to the transmission signal after the IFFT, and outputs the transmission signal to which CPs have been added to the amplifying section 202 shown in FIG. 17.

The receiving section 411 receives the transmission signal from the user terminal, and, from this received signal, extracts terminal capability information (UE capabilities), received quality information and channel quality information (CQI), and outputs these to the terminal capability detection section 412, the received quality detection section 413, and the CQI detection section 414, respectively.

The terminal capability detection section 412 detects the communication capabilities of the connecting user terminal based on the reported terminal capabilities of the user terminal.

The received quality detection section 413 detects the received quality (for example, the RSRP) of the measurement candidate cells based on the measurement report result.

The CQI detection section 414 detects the received quality on the uplink/downlink.

The CoMP candidate cell determining section 415 determines CoMP candidate cells from the measurement candidate cells based on the terminal capabilities of the user terminal and the received quality of the measurement candidate cells, and generates a CIF table in which CIF bit information is allocated to each CoMP candidate cell. The CoMP candidate cells include individual coordinated cells that serve as transmission points in CoMP transmission (DPS and CS/CB) and CoMP sets to represent the combination of multiple cells that carry out joint transmission in CoMP transmission (JT). The CoMP candidate cell determining section 415 outputs information of the generated CIF table to the backhaul communication section 401 and the scheduler 416.

The scheduler 416 determines the CoMP transmission cells to transmit the shared data channel to the user terminal from the CoMP candidate cells, based on the CQIs fed back from the user terminal. When carrying out cross-carrier scheduling, the scheduler 416 indicates the CIFs to show the indices of the CoMP transmission cells to the downlink control information generating section 404.

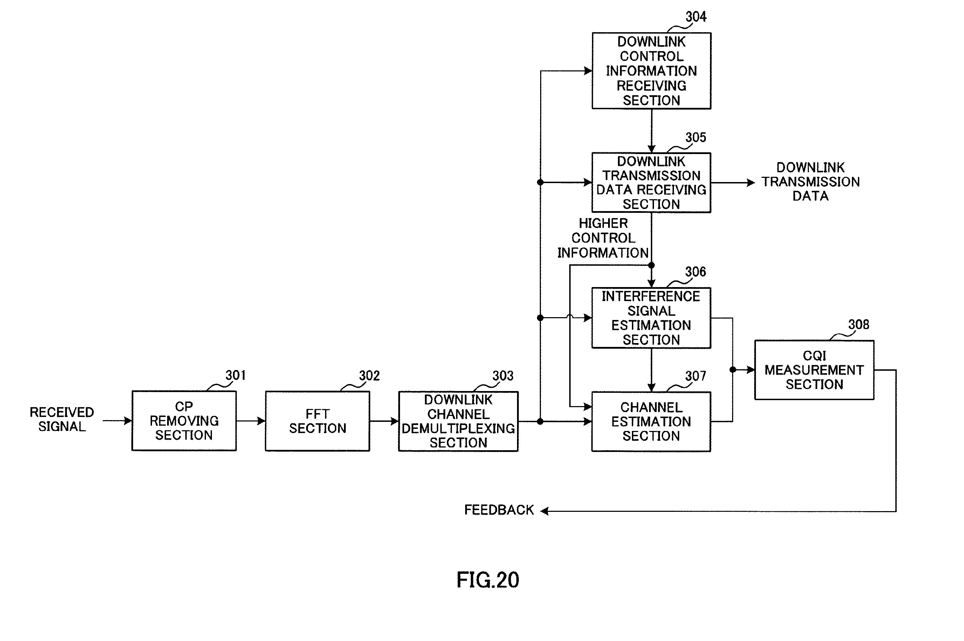

The function blocks of the user terminal according to the present embodiment will be described with reference to FIG. 20. Note that each function block in FIG. 20 primarily relates to the baseband signal processing section 104 shown in FIG. 18. The function blocks shown in FIG. 20 are simplified to explain the present invention, but are assumed to have configurations which a baseband signal processing section should normally have.

The user terminal 10 has, on the receiving side, a CP removing section 301, an FFT section 302, a downlink channel demultiplexing section 303, a downlink control information receiving section 304, a downlink transmission data receiving section 305, an interference signal estimation section 306, a channel estimation section 307, and a CQI measurement section 308.

A transmission signal that is transmitted from the base station apparatus 20 is received in the transmitting/receiving antenna 101 shown in FIG. 18, and output to the CP removing section 301. The CP removing section 301 removes the CPs from the received signal and outputs the result to the FFT section 302. The FFT section 302 performs a fast Fourier transform (FFT) of the signal, from which the CPs have been removed, and converts the signal from a time domain signal to a frequency domain signal. The FFT section 302 outputs the signal having been converted into a frequency domain signal, to the downlink channel demultiplexing section 303.

The downlink channel demultiplexing section 303 demultiplexes the downlink channel signal into the downlink control information, the downlink transmission data, and the RSs. The downlink channel demultiplexing section 303 outputs the downlink control information to the downlink control information receiving section 304, outputs the downlink transmission data and higher control information to the downlink transmission data receiving section 305, outputs the interference measurement RS to the interference signal estimation section 306, and outputs the desired signal measurement RS to the channel estimation section 307.

The downlink control information receiving section 304 demodulates the downlink control information (DCI), and outputs the demodulated DCI to the downlink transmission data receiving section 305. The downlink transmission data receiving section 305 demodulates the downlink transmission data using the demodulated DCI. That is, the downlink control information receiving section 304 functions as a detection section that analyzes the indices of CoMP transmission cells incorporated in the CIF of the DCI included in the PDCCH received from the special cell, using the CIF table, and specifies the CoMP transmission cells from the CIF bit information. The downlink transmission data receiving section 305 demodulates the PDSCHs from the specified CoMP transmission cells. The downlink transmission data receiving section 305 outputs the higher control information included in the downlink transmission data, to the interference signal estimation section 306 and the channel estimation section 307.

The interference signal estimation section 306 estimates interference signals using downlink reference signals such as CRSs and CSI-RSs. The interference signal estimation section 306 can estimate interference signals and average the measurement results over all resource blocks. The averaged interference signal estimation result is reported to the CQI measurement section 308.

The channel estimation section 307 specifies the desired signal measurement REs (CSI-RS resources) based on information such as transmission parameters included in the higher control information (or the downlink control information), and estimates the desired signals with the desired signal measurement REs. Note that, as shown in FIG. 9B above, apart from the desired signal measurement REs (SMRs), the channel estimation section 307 can perform channel estimation using interference measurement REs (IMRs) as well.

The channel estimation section 307 reports channel estimation values to the CQI measurement section 308. The CQI measurement section 308 calculates the channel state (CQI) based on the interference measurement result reported from the interference signal estimation section 306, the channel estimation result reported from channel estimation section 307 and the feedback mode. Note that the feedback mode may be set in any of wideband CQI, subband CQI, best-M average. The CQIs calculated in the CQI measurement section 308 are reported to the base station apparatus 20 as feedback information.

The radio communication system where the above configuration is applied will be described. In the base station apparatus 20, the receiving section 411 receives a transmission signal from the user terminal, extracts the terminal capability information (UE capabilities), the received quality information, and the channel quality information (CQIs) from this received signal, and outputs these to the terminal capability detection section 412, the received quality detection section 413, and the CQI detection section 414, respectively. The terminal capability detection section 412 detects the communication capabilities of the connecting user terminal based on the reported terminal capabilities of the user terminal. The received quality detection section 413 detects the received quality (for example, RSRP) of the measurement candidate cell based on the measurement report result. The CQI detection section 414 detects the received quality of the uplink/downlink.

The CoMP candidate cell determining section 415 determines CoMP candidate cells from the measurement candidate cells based on the terminal capabilities of the user terminal and the received quality of the measurement candidate cells, and generates a CIF table in which CIF bit information is allocated to each CoMP candidate cell. This CIF table is signaled to the user terminal via the higher control information generating section 402.

The scheduler 416 determines the CoMP transmission cells to transmit the shared data channel to the user terminal from the CoMP candidate cells, based on the CQIs fed back from the user terminal, and indicates the CIFs to show the indices of the CoMP transmission cells to the downlink control information generation section 404.

The downlink control information generating section 404 generates DCI, in which the indices of transmitting cells upon CoMP transmission, designated by the scheduler 416, are written in the CIF.

In the user terminal 10, the downlink control information receiving section 304 analyzes the indices of CoMP transmission cells incorporated in the CIF of the DCI included in the PDCCH received from the special cell, using the CIF table, and specifies the CoMP transmission cells from the CIF bit information. The downlink transmission data receiving section 305 demodulates the PDSCHs from the specified CoMP transmission cells.

Note that the present invention is by no means limited to the above embodiment and can be carried out with various changes. The size, shape and so on of the above embodiment shown in the accompanying drawings are by no means limiting, and can be changed as appropriate within the range in which the effect of the present invention can be achieved. Besides the present invention can be changed and implemented as appropriate within the scope of the object of the present invention.

The disclosure of Japanese Patent Application No. 2012-108844, filed on May 10, 2012, including the specification, drawings, and abstract, is incorporated herein by reference in its entirety.

## Claims

1. A radio communication system comprising a plurality of radio base station apparatuses that each form a cell, and a user terminal that connects with each radio base station apparatus through a radio link, wherein:
the radio communication system supports a transmission mode, in which the plurality of radio base station apparatuses serve as transmission points and carry out CoMP transmission to the user terminal, a radio base station apparatus of a special cell transmits physical downlink control channels of multiple cells, and also all the radio base station apparatuses that carry out CoMP transmission transmit a physical downlink shared data channel of each cell;
the radio base station apparatus of the special cell comprises:
a generating section that, based on a table in which indices to represent individual coordinated cells that serve as transmission points in CoMP transmission and indices of CoMP sets to represent combinations of multiple cells that carry out joint transmission in CoMP transmission are mapped to bit data, generates downlink control information, in which the indices of CoMP sets are incorporated in a physical downlink control channel that is shared between the multiple cells that carry out joint transmission; and
a transmission section that transmits the physical downlink control channel of each cell, including the downlink control information generated; and
the user terminal comprises:
a receiving section that, when the transmission mode is applied, receives the physical downlink control channels of the multiple cells from the radio base station apparatus of the special cell, and also receives a physical downlink shared data channel from all the radio base station apparatuses that carry out coordinated multi-point transmission; and
a determining section that analyzes the indices of CoMP sets incorporated in the downlink control information included in the physical downlink control channels received, using a table of the same content as in the radio base station apparatus of the special cell, and specifies a CoMP set.

2. The radio communication system according to claim 1, wherein:
the radio communication system defines a carrier indicator field, in which cell identification information of the physical downlink control channels is written, in the downlink control information of the physical downlink control channels; and
the radio base station apparatus of the special cell writes the bit data to represent the indices of the coordinated cells or the CoMP sets in the carrier indicator field.

3. The radio communication system according to claim 1, wherein, in the table, the CoMP sets to be mapped to the bit data are limited so as not to include a CoMP set formed with a combination of cells where communication quality does not fulfill a quality requirement.

4. The radio communication system according to claim 1, wherein, in the table, the coordinated cells or CoMP sets including the coordinated cells to be mapped to the bit data are limited so as not to include part or all of the coordinated cells where communication quality does not fulfill a quality requirement.

5. The radio communication system according to claim 1, wherein, in the table, the coordinated cells to be mapped to the bit data are limited so as not to include part or all of the coordinated cells when a bit size of the downlink control information of the physical downlink control channels of multiple cells scheduled in one subframe varies.

6. The radio communication system according to claim 1, wherein, in the table, indices combining the individual coordinated cells that serve as transmission points in CoMP transmission and subframe numbers that serve as transmission intervals of the physical downlink shared data channel, and indices combining CoMP sets and the subframe numbers that serve as transmission intervals of the physical downlink shared data channel are mapped to the bit data.

7. A radio base station apparatus to which a user terminal connects through a radio link, the radio base station apparatus comprising:
a scheduler that schedules CoMP transmission in which, with other radio base station apparatuses, the radio base station apparatus serves as a transmission point and carries out coordinated multi-point transmission to the user terminal;
a generating section that, when, in CoMP transmission, physical downlink control channels of multiple cells are transmitted from a special cell, generates downlink control information, based on a table in which indices to represent individual coordinated cells that serve as transmission points and indices of CoMP sets to represent combinations of multiple cells that carry out joint transmission are mapped to bit data, where, in the downlink control information, the indices of CoMP sets are incorporated in a physical downlink control channel that is shared between the multiple cells that carry out joint transmission; and
a transmission section that transmits the physical downlink control channel of each cell, including the downlink control information generated, from the special cell.

8. A user terminal that connects with a plurality of radio base station apparatuses that each form a cell, through a radio link, the user terminal comprising:
a receiving section that, when, in CoMP transmission in which the plurality of radio base station apparatuses carry out coordinated multi-point transmission, a special cell transmits physical downlink control channels of multiple cells, receives the physical downlink control channels of the multiple cells from the radio base station apparatus of the special cell, and also receives a physical downlink shared data channel from all the radio base station apparatuses that carry out coordinated multi-point transmission; and
a detection section that analyzes the indices of coordinated cells or CoMP sets incorporated in the downlink control information included in the physical downlink control channel of each cell received, using a table that is prepared in advance, and specifies coordinated cells or a CoMP set,
wherein, in the table, indices to represent individual coordinated cells that serve as transmission points in CoMP transmission and indices of CoMP sets to represent combinations of multiple cells that carry out joint transmission in CoMP transmission are mapped to bit data.

9. A communication control method in a radio communication system comprising a plurality of radio base station apparatuses that each form a cell, and a user terminal that connects with each radio base station apparatus through a radio link, the communication control method comprising:
scheduling CoMP transmission in which the plurality of radio base station apparatuses serve as transmission points and carry out coordinated multi-point transmission to the user terminal; and
when, in CoMP transmission, physical downlink control channels of multiple cells are transmitted from a special cell, generating downlink control information, based on a table in which indices to represent individual coordinated cells that serve as transmission points and indices of CoMP sets to represent combinations of multiple cells that carry out joint transmission are mapped to bit data, where, in the downlink control information, the indices of CoMP sets are incorporated in a physical downlink control channel that is shared between the multiple cells that carry out joint transmission; and
transmitting the physical downlink control channel of each cell, including the downlink control information generated, from the special cell.

10. A communication control method in a radio communication system comprising a plurality of radio base station apparatuses that each form a cell, and a user terminal that connects with each radio base station apparatus through a radio link, the communication control method comprising:
when, in CoMP transmission in which the plurality of radio base station apparatuses carry out coordinated multi-point transmission, a special cell transmits physical downlink control channels of multiple cells, receiving the physical downlink control channels of the multiple cells from the radio base station apparatus of the special cell, and also receiving a physical downlink shared data channel from all the radio base station apparatuses that carry out coordinated multi-point transmission; and
analyzing the indices of coordinated cells or CoMP sets incorporated in the downlink control information included in the physical downlink control channel of each cell received, using a table that is prepared in advance, and specifying coordinated cells or a CoMP set,
wherein, in the table, indices to represent individual coordinated cells that serve as transmission points in CoMP transmission and indices of CoMP sets to represent combinations of multiple cells that carry out joint transmission in CoMP transmission are mapped to bit data.
